# FASCICULE DE BREVET EUROPEEN

(11) **EP 2 522 892 B1**
(45) Date de publication et mention de la délivrance du brevet: **22.03.2017**
(21) Numéro de dépôt: 12165913.0
(22) Date de dépôt: 27.04.2012
(51) Int. Cl.: F16L 3/133, H02G 3/32, F16B 9/02

(54) **Ensemble de supportage comprenant une tige et procédé de mise en place d'un tel ensemble**
Tragstruktureinheit, die einen Stab umfasst, und Verfahren zur Montage einer solchen Tragstruktureinheit
Support assembly including a rod and method for placing such an assembly

(30) Priorité: 12.05.2011 FR 1101438
(43) Date de publication de la demande: 14.11.2012
(73) Titulaire: Raccords et Plastiques Nicoll, 49300 Cholet (FR)
(72) Inventeur: Lecointe, Nicolas, 44400 REZE (FR); Boismenu, François, 63530 VOLVIC (FR)
(74) Mandataire: Sonnenberg, Fred

(56) Documents cités:
- DE-U1- 8 517 400
- FR-A1- 2 717 554
- US-A- 545 774
- US-A- 545 775
- US-A1- 2002 011 548

## Description

La présente invention concerne au sens le plus large le supportage par suspension, appliqué par exemple dans le domaine du supportage de canalisation de transport de fluide dans des bâtiments et réseaux. Plus précisément, la présente invention concerne une tige de supportage, un ensemble de supportage ainsi qu'un procédé de mise en place d'un ensemble de supportage d'élément porté sur un élément porteur tel qu'un élément de construction, en particulier pour des canalisations.

Des bâtiments comprennent classiquement des canalisations pour le transport de fluides, eaux, gaz. Les canalisations peuvent être situées par exemple en vide sanitaire ou bien sous plafond. Des systèmes de supportage de canalisation sont généralement utilisés pour caler et supporter les canalisations. Par exemple, en vide sanitaire, les canalisations peuvent être classiquement calées sur le sol à l'aide par exemple de parpaings. Autrement, des systèmes de maintien peuvent être utilisés pour maintenir les canalisations.

Un système de maintien comprend classiquement un système d'accroche associé à un collier de serrage. Le système d'accroche peut comprendre une pluralité de tiges filetées ou vis, à laquelle une pluralité de colliers de serrage est fixée. La pluralité de tiges filetées ou vis, avec collier de serrage, est régulièrement espacée sur la longueur de la canalisation, assurant un bon maintien de la canalisation.

Les canalisations peuvent être agencées verticalement, horizontalement, ou bien inclinées selon des pentes de canalisation définies par des normes de construction. La pente est classiquement obtenue en modifiant la position verticale de chaque collier de serrage, modifiant ainsi la position verticale de la canalisation. Le document US 2002/011548 décrit un ensemble de supportage selon le préambule de la revendication 1.

Un objet de la présente invention est de simplifier le montage en suspension d'élément porté telle qu'une canalisation sur un élément de construction.

A cet effet, l'invention propose un ensemble de supportage de canalisation selon la revendication 1 et un procédé selon la revendication 11.

Selon la présente invention, un ensemble de supportage de canalisation comprend: une tige de supportage, une embase de verrouillage, comprenant un plateau et une zone de maintien pour le verrouillage de la tige insérée dans l'embase, la tige insérée dans l'embase de verrouillage étant verrouillée par rotation relative de l'embase par rapport à la tige. La tige de supportage comprend un corps de tige, une pluralité de crans latéraux, sensiblement perpendiculaires au corps de tige, et un système de raccordement de collier, pour fixer un collier de serrage, prévu pour le maintien d'un élément porté. En prévoyant un verrouillage par rotation relative de la tige et de l'embase, l'assemblage de la tige et de l'embase peut se faire de manière simple, sans outils supplémentaire.

Selon un aspect de la présente invention, les crans latéraux étant régulièrement espacés afin de servir de repère. Ainsi, le réglage de la hauteur de tige peut être facilement réalisé, sans avoir à utiliser d'autres outils de mesure.

La tige peut être de forme sensiblement cylindrique aplatie, et comprendre des moyens de verrouillage de tige, adaptés pour assembler la tige avec une autre tige similaire. Avantageusement, les moyens de verrouillage de tige étant adaptés pour un assemblage bout à bout de la tige de supportage avec une autre tige de supportage similaire. Ainsi, la longueur totale de tige peut être modifiée, permettant une souplesse d'utilisation.

Selon un aspect de la présente invention, la zone de maintien est une saillie de forme cylindrique creuse sensiblement complémentaire de la tige, projetant sensiblement perpendiculairement au plateau. La zone de maintien peut comprendre une projection annulaire, la projection annulaire (étant sensiblement prévue pour un emboitement entre deux crans successifs de la tige. Une butée dans le prolongement de la projection annulaire peut également être prévue, pour le verrouillage de la tige dans l'embase.

De préférence, la rotation pour le verrouillage de la tige insérée dans l'embase est une rotation d'un quart de tour.

Selon un aspect de l'invention, l'embase comprend des moyens de marquages visuels et/ou tactiles indiquant un sens de rotation pour le verrouillage de la tige dans l'embase.

La présente invention propose également un procédé de mise en place d'un ensemble de supportage d'élément porté sur un élément de construction, comprenant les étapes consistant à positionner une première tige de supportage verticalement sur l'élément de construction, insérer la première tige de supportage dans une première embase de verrouillage, régler la hauteur de la première tige de supportage par rapport à l'élément de construction, verrouiller la première tige insérée dans l'embase par rotation relative de l'embase, par rapport à la première tige.

Selon un aspect de l'invention, la hauteur de la première tige peut être repérée à l'aide de crans de la tige. Avantageusement, une autre tige de supportage peut être positionnée bout à bout avec la première tige de supportage, ce qui permet de régler la hauteur sur une plus grande plage de travail.

Selon un autre aspect de l'invention, un premier et un deuxième ensembles de supportage successifs sont mis en place, le premier ensemble de supportage comprenant une première tige de supportage et une première embase, le deuxième ensemble de supportage comprenant une deuxième tige de supportage et une deuxième embase, le procédé comprenant l'étape consistant à décaler verticalement la deuxième tige sur l'élément de construction d'au moins un cran par rapport à la première tige du premier ensemble déjà monté sur l'élément de construction.

Avantageusement, l'élément porté est une canalisation.

D'autres caractéristiques et avantages de l'invention apparaîtront plus clairement à la lecture de la description de plusieurs modes réalisation actuellement préférés, donnée à titre d'exemple uniquement, et en référence aux dessins joints parmi lesquels :
- la figure 1 représente un ensemble de supportage selon un aspect de la présente invention,
- la figure 2 représente une tige de supportage et une embase de verrouillage utilisable dans l'ensemble de la figure 1 selon un aspect de la présente invention
- la figure 3a illustre une tige de supportage avec un collier de support utilisable dans l'ensemble de supportage de la figure 1, selon un aspect de la présente invention,
- la figure 3b illustre une tige de supportage avec un collier de support utilisable dans l'ensemble de supportage de la figure 1, selon un autre aspect de la présente invention
- la figure 4 illustre une embase de verrouillage utilisable dans un ensemble de supportage de canalisation selon un autre aspect de l'invention,
- la figure 5 illustre une tige de supportage alternative utilisable dans un ensemble de supportage de canalisation selon un autre aspect de la présente invention,
- la figure 6 illustre deux tiges de supportage selon un aspect de la présente invention,
- la figure 7a illustre un procédé de mise en place d'un ensemble de supportage de canalisation en entrevous et la figure 7b illustre une canalisation installée en entrevous,
- la figure 8a illustre un procédé de mise en place d'un ensemble de supportage de canalisation sous plafond et la figure 8b illustre une canalisation installée sous plafond.

Sur les figures, des éléments identiques sont identifiés par des références numériques identiques.

L'invention est décrite à l'aide de l'exemple du supportage de canalisation, à titre d'exemple non limitatif. La présente invention peut être appliquée pour tout dispositif de support par suspens par rapport à un élément porteur, en particulier un élément de construction, tel que par exemple un plafond, une dalle, un entrevous. De même, la présente invention est décrite en référence à une canalisation en tant qu'élément porté. Bien entendu, d'autres éléments portés tels que des câbles sont aussi envisagés.

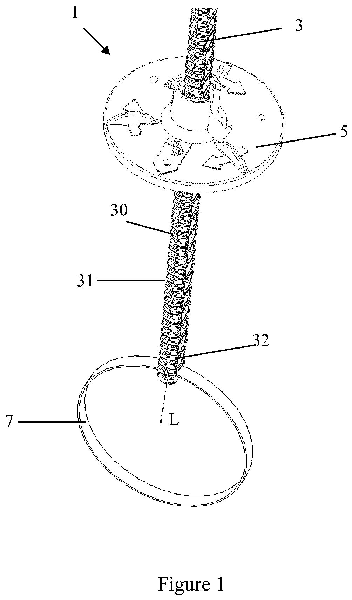

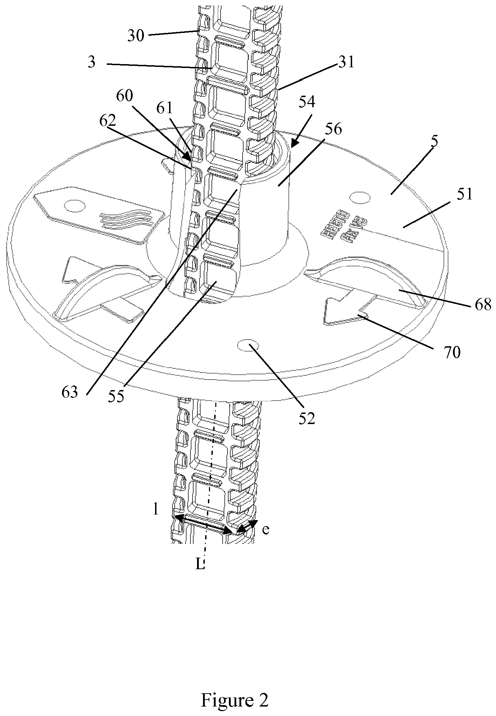

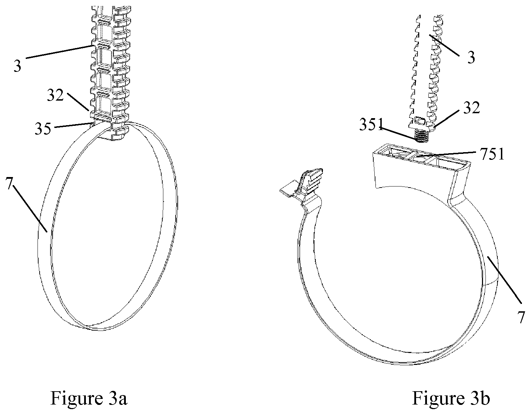

La figure 1 illustre un ensemble de supportage 1 pour supporter une canalisation 2 en tant qu'exemple d'élément porté, selon un aspect de la présente invention. Une tige de supportage et une embase de verrouillage utilisable dans l'ensemble de supportage 1 sont illustrées aux figures 2 et 3.

L'ensemble de supportage 1 comprend une tige 3 et une embase de verrouillage 5. La tige 3 comprend un corps de tige 31, sensiblement aplati, définissant un axe longitudinal L. Un collier de serrage 7 est monté sur une extrémité longitudinale 32 de la tige 3. A l'extrémité longitudinale 32 de la tige est prévu un système de raccordement du collier de serrage 7. Différents types de montage du collier de serrage 7 sur la tige 3 sont prévus. Le collier de serrage 7 peut être monté par différents types de montage, par exemple par vissage, clipsage ou enfilage.

Comme illustré à la figure 3a, une ouverture de collier 35 peut-être est ménagée à l'extrémité longitudinale 32 de la tige. L'ouverture de collier 35 est prévue pour le passage du collier de serrage 7. L'ouverture de fixation 35 est de préférence une fente, mais d'autres formes sont aussi envisagées.

Autrement, comme illustré à la figure 3b, le collier de serrage 7 peut être fixé sur l'extrémité longitudinale 32 de la tige 3 par vissage complémentaire de moyen de fixation 351 de la tige et de moyen de fixation 751 du collier de serrage 7. Le collier 7 ainsi fixé peut être clipsé sur lui-même pour fermeture.

Le collier de serrage 7 est de préférence un collier de supportage, prévu pour entourer et maintenir la canalisation 2. Le collier de serrage est de préférence un collier type sangle flexible, pour le supportage de la canalisation. Le collier de serrage peut également être du type collier rigide.

La tige 3 est munie de crans 30, montés latéralement de part et d'autre du corps de tige 31, et orientés sensiblement perpendiculairement au corps de tige 31. La tige ainsi formée est sensiblement symétrique par rapport à l'axe longitudinal L. Ainsi, la tige 3 est de forme cylindrique, avec des méplats et des crans.

La tige 3 dans le mode de réalisation des figures 1-3 est de forme sensiblement cylindrique aplatie, avec des crans de part et d'autre de la zone aplatie. Ainsi, la tige présente une largeur cran à cran, appelée largeur 1, qui est supérieure à l'épaisseur e du corps de tige 31.

D'autres formes sont également envisageables, telle qu'une forme cylindrique avec des crans sur toute la périphérie de la tige, ou une forme triangulaire ou hexagonale. Toute forme présentant une symétrie dans le sens de la longueur peut être envisagée.

De même, la tige 3 est munie de crans 30, montés latéralement de part et d'autre du corps de tige 31. Dans une autre configuration, la tige 3 peut être munie de crans montés non pas de part et d'autre du corps de tige mais d'un seul coté du corps de tige.

La tige 3 est prévue pour être insérée dans l'embase de verrouillage 5.

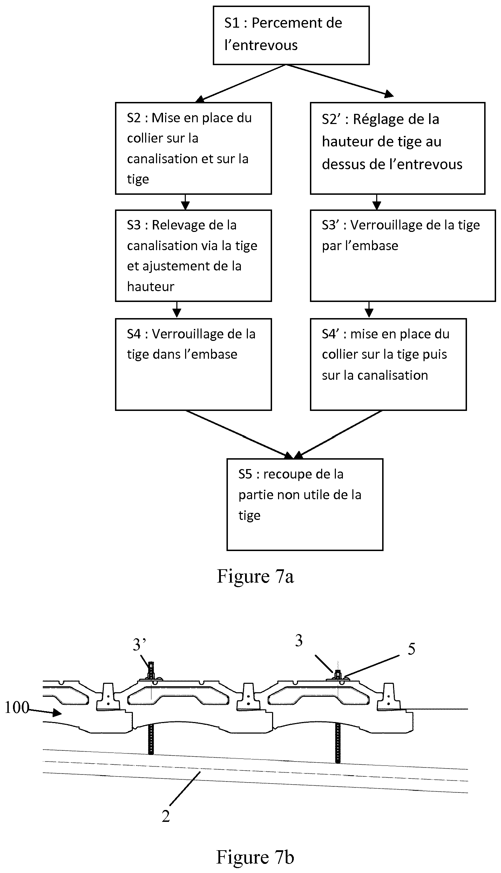

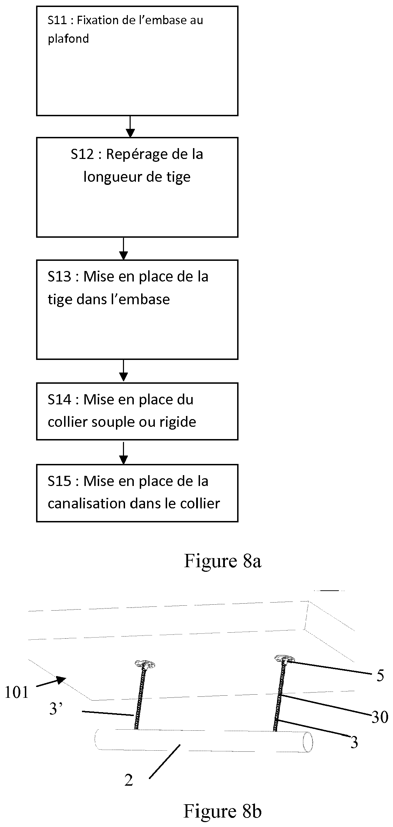

Comme cela sera décrit plus tard en référence aux figures 7a et 8a, les crans forment un moyen de réglage de pente, en particulier l'espacement régulier des crans 30 est un outil permettant de régler la hauteur de la canalisation, pour chaque ensemble de supportage, et ainsi la pente de la canalisation lorsqu'une pluralité d'ensembles de supportage est utilisée.

L'embase de verrouillage 5 comprend un plateau 51 et une zone de maintien 54.

Le plateau 51 est muni de trous de fixation 52, pour fixer l'embase de verrouillage 5 sur un support de construction, par exemple un faux plafond ou un vide sanitaire. Les trous de fixation 52 de l'embase de verrouillage 5 représentée à la figure 3 sont trois ouvertures 52 dimensionnées pour le passage d'un élément de fixation type clou ou cheville béton. De préférence, les trous de fixation 52 sont répartis équitablement sur le plateau 51, pour une bonne répartition des efforts appliqués sur l'embase lorsque celle-ci est fonctionnelle.

La zone de maintien 54 est prévue pour l'insertion et la fixation de la tige 3 insérée dans l'embase de verrouillage 5. La zone de maintien 54 comprend une ouverture d'insertion 55 de tige, dimensionnée pour permettre l'insertion de la tige 3, et une partie de fixation 56 de tige, agencée pour fixer la tige 3 à l'embase de verrouillage 5.

L'ouverture d'insertion 55 a de préférence une dimension inférieure à la largeur cran à cran de la tige, ce qui permet l'insertion de la tige dans le sens de l'épaisseur uniquement.

La partie de fixation 56 est une saillie, de forme cylindrique creuse élongée, sensiblement complémentaire de la forme de la tige 3, et projetant sensiblement perpendiculairement au plateau 51 de l'embase de verrouillage 5. La forme élongée de la partie de fixation 56 permet d'obtenir une bonne stabilité de la tige 3 montée dans l'embase 5, et une bonne répartition des efforts induits lorsque l'ensemble de supportage maintient la canalisation 2.

La partie de fixation 56 comprend des moyens de maintien 60 de la tige 3. Les moyens de maintien 60 sont prévus pour coopérer avec les crans 30 de la tige 3. Tels qu'illustrés à la figure 3, les moyens de maintien 60 comprennent une projection annulaire 61 et une butée 62. La projection annulaire 61 est une projection annulaire radiale, dimensionnée pour être logée entre deux crans successifs 30, en contact avec la tige 3. Autrement dit, la projection annulaire 60 est sensiblement prévue pour un emboitement entre deux crans successifs de la tige 3.

Ainsi, l'homme du métier comprendra que la fixation de la tige dans l'embase s'effectue par insertion de la tige, dans le sens de l'épaisseur de la tige, dans l'ouverture d'insertion 55, la translation de la tige depuis l'ouverture d'insertion 55 jusqu'à la partie de fixation 56, la mise en contact de la projection annulaire 61 entre deux crans 30, et enfin la rotation relative de la tige par rapport à l'embase jusqu'à ce que la tige entre en contact avec la butée 62. Lorsque la tige entre en contact avec la butée 62, la tige est verrouillée à l'intérieur de la partie de fixation 56.

La butée 62 est située à l'une ou l'autre des extrémités circonférentielles 63 de la projection annulaire 60. On notera qu'une seule des extrémités 63 est munie d'une butée, c'est-à-dire qu'il existe un sens de rotation pour fixer la tige 3 dans l'embase 5.

Dans l'exemple représenté, la rotation de la tige est une rotation d'un quart de tour, mais la rotation est déterminée par la position de la butée sur la projection annulaire 61.

Des moyens de détrompage peuvent également être prévus pour assurer que la rotation s'effectue dans le sens déterminé de verrouillage.

Avantageusement, des moyens de préhension sont fournis sur le plateau 51 pour permettre à l'utilisateur de tourner l'embase une fois la tige insérée dans l'embase. Des marquages visuels et/ou tactiles 70 peuvent être prévus sur le plateau 51 de l'embase 5, afin d'indiquer visuellement le sens de rotation prévu pour le verrouillage de la tige.

Des moyens anti-déverrouillage peuvent également être prévus pour éviter le déverrouillage de la tige et de l'embase. Ce système peut se traduire par une goupille prenant place entre l'espace 55 de l'embase et le plat de la tige par exemple.

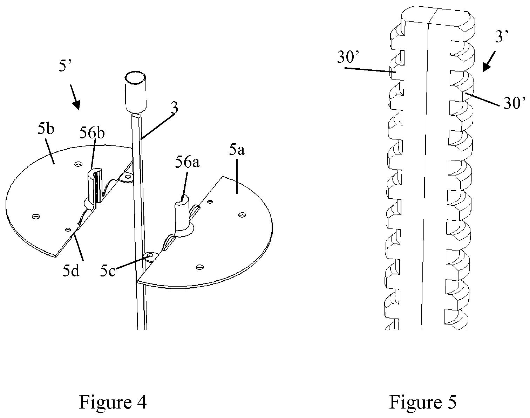

L'embase des figures 1-2 est conçue en un seul élément. L'embase peut autrement être conçue en plusieurs morceaux, comme l'embase 5' de la figure 4.

L'embase 5' comprend deux demi embases 5a, 5b, chaque demi-embase 5a, 5b comprenant des moyens d'attache 5c de la demi-embase 5a avec les moyens d'attaches complémentaires 5d de l'autre demi-embase 5b correspondante. Les moyens d'attache 5c, 5d illustrés sont des moyens de clipsage. Chaque demi-embase 5a, 5b est ainsi pourvue d'une demi-zone de fixation 56a, 56b. Lorsque les demi-embases 5a, 5b sont attachées, les demi-zones de fixation 56a, 56b forment une zone de fixation de tige, de forme cylindrique creuse élongée, sensiblement complémentaire de la forme de la tige 3, et projetant sensiblement perpendiculairement au plateau de l'embase de verrouillage formée par les deux demi-embases 5a, 5b.

La tige 3, dans le mode de réalisation des figures 1-4, est de forme sensiblement symétrique, avec des crans de part et d'autre de la zone aplatie à des niveaux longitudinaux sensiblement alignés.

Dans un autre mode de réalisation illustré à la figure 5, la tige 3' peut être munie de crans 30' de part et d'autre de la zone aplatie, à des niveaux longitudinaux décalés, avec un cran sur deux sur chaque côté. On comprendra que dans cette configuration, la rotation est possible dans un sens ou l'autre pour obtenir le verrouillage de la tige dans l'embase.

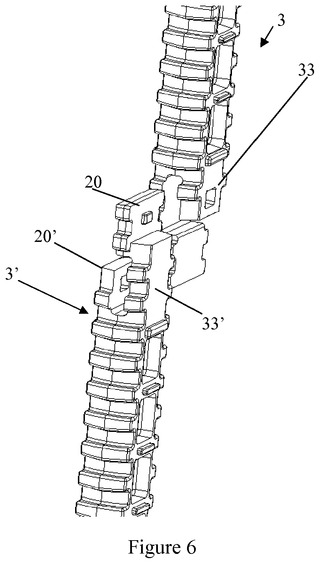

Enfin, comme illustrés à la figure 6, des moyens de verrouillage 20 de tige sont également prévus à une autre extrémité longitudinale 33 de la tige 3. Les moyens de verrouillage 20 sont adaptés pour permettre la fixation de la tige 3 avec une autre tige 3', bout à bout, pour augmenter la longueur totale de tige. Les moyens de verrouillage sont prévus pour que, lorsque les deux tiges 3, 3' sont reliées entre elles, les deux tiges ne forment qu'un seul corps de tige cranté sur toute sa longueur. Dans le mode de réalisation de la figure 6, les moyens de verrouillage 20 sont un système de clipsage bout à bout, coopérant avec les moyens de verrouillage 20' de la tige 3'. De préférence, les tiges 3 et 3' sont identiques.

Un procédé de mise en place d'ensemble de supportage de canalisation en tant qu'exemple d'élément porté dans un premier mode de réalisation est illustré à la figure 7a, conjointement à la figure 7 illustrant une canalisation 2 installée en vide sanitaire. Dans ce mode de réalisation, la canalisation est installée en pente, sous vide sanitaire, sous un élément porteur comme un entrevous 100 type entrevous polystyrène, bois compressé ou autre.

Dans une première étape S1, la tige crantée est mise en place à travers l'entrevous polystyrène. La tige 3 permet de traverser l'entrevous polystyrène par perforation. Autrement, du fer à béton peut être utilisé.

La canalisation 2, en attente sur le sol nu, peut alors être attachée à la tige 3 via un collier de serrage souple 7 passant dans la fente de la tige. Autrement, la canalisation 2, en attente sur le sol nu, peut alors être attachée à la tige 3 via un collier de serrage rigide lié à la tige par vissage (étape S2).

Dans une troisième étape S3, la hauteur de tige 3 dépassant sous l'entrevous 100 est déterminée, pour le réglage de la pente de la canalisation. Le réglage de la pente est obtenu en utilisant les crans 30 de la tige. Chaque supportage successif de canalisation, en particulier chaque tige 3, peut être décalée d'un cran de tige par rapport à la tige précédente.

L'espacement des crans peut être prévu pour obéir aux normes en vigueur concernant les pentes de canalisation. Ainsi, l'espacement régulier des crans 30 est un outil permettant de régler la hauteur de la canalisation, pour chaque ensemble de supportage, et ainsi la pente de la canalisation lorsqu'une pluralité d'ensembles de supportage est utilisée.

Dans une quatrième étape S4, la tige 3 est verrouillée dans l'embase 5 par rotation relative d'un quart de tour, jusqu'à atteindre la butée 62. Comme précisé en référence aux figures 1-2, l'embase 5 est munie de moyens de préhension pour permettre à l'installateur de tourner l'embase 5. Des marquages visuels et/ou tactiles 70 sont avantageusement prévus sur le plateau 51 de l'embase 5, afin d'indiquer visuellement le sens de rotation prévu pour le verrouillage de la tige.

En variante, l'utilisateur peut verrouiller la tige sur l'embase par rotation de ladite tige avant de fixer la canalisation avec le collier sur la tige.

Dans ce cas, après la première étape S1, la hauteur de tige est réglée au dessus de l'entrevous (étape S2'). Dans une troisième étape S3', la tige 3 est verrouillée dans l'embase 5.

Dans une quatrième étape S4', le collier de serrage 7 peut être mise en place sur la tige 3.Le collier de serrage souple 7 peut passer dans la fente de la tige 3. Autrement, le collier de serrage peut être du type rigide, lié à la tige par vissage.

Enfin, la partie non utile de la tige 3 peut être découpée dans une étape S5. La tige 3 peut être recoupée pour ajustement, par exemple à l'aide d'un coupe-boulon ou d'un autre outil usuel.

L'homme du métier comprendra que l'utilisateur peut tourner soit l'embase 5 soit la tige 3 pour le verrouillage de la l'ensemble.

L'embase 5 peut donc être fixée avant verrouillage ou après verrouillage de la tige 3 dans l'embase 5, selon les conditions de travail lors de la mise en place de la canalisation. L'embase 5 peut être maintenue plus fermement sur l'entrevous par clouage dans le polystyrène par les trous 52 ou bien par ligaturation sur le ferraillage qui sera mis en place avant le coulage du béton.

Le verrouillage par rotation permet de limiter le nombre de pièces de l'ensemble de supportage, tout en fournissant un moyen très intuitif de verrouillage.

On notera également que les crans 30 de la tige 3 sont adaptés pour permettre une résistance à la traction suffisante par rapport aux poids de la canalisation 2.

De même, l'homme du métier comprendra que l'embase 5 permet avantageusement, par l'intermédiaire du plateau 51, de répartir les efforts dus aux charges de la canalisation supportée sur l'entrevous polystyrène.

L'utilisateur peut ensuite assembler le prochain ensemble de supportage de canalisation, en répétant les étapes ci-dessus, notamment en décalant d'un cran la tige 3.

Autrement, la canalisation peut être installée en plafond. Un procédé de mise en place d'ensemble de supportage de canalisation lorsque la canalisation est installée en plafond en tant qu'exemple d'élément porteur est illustré à la figure 8a, conjointement à la figure 8b illustrant une canalisation 2 installée sous plafond 101.

Dans une première étape S11, la tige crantée est mise en place sur le plafond. L'embase 5 est fixée au plafond par clouage ou par un système vis-cheville. Du fer à béton peut être utilisé. Un repère visuel peut être prévu pour indiquer le sens de la canalisation 2.

Dans une deuxième étape S 12, la hauteur de tige 3 dépassant sous l'entrevous est déterminée, pour le réglage de la pente de la canalisation. Si la tige est trop longue, elle peut être recoupée. Le réglage de la pente est obtenu en utilisant les crans 30 de la tige. Chaque supportage successif de canalisation, en particulier chaque tige 3, peut être décalée d'un cran de tige par rapport à la tige précédente.

Ainsi, l'espacement régulier des crans 30 est un outil permettant de régler la hauteur de la canalisation, pour chaque ensemble de supportage, et ainsi la pente de la canalisation lorsqu'une pluralité d'ensembles de supportage est utilisée.

Dans une troisième étape S13, la tige 3 est verrouillée dans l'embase 5 par rotation relative d'un quart de tour, jusqu'à atteindre la butée 62. Bien entendu, l'utilisateur peut tourner soit l'embase 5 soit la tige 3 pour le verrouillage de la l'ensemble. L'embase 5 peut donc être fixée avant verrouillage ou après verrouillage de la tige 3 dans l'embase 5, selon les conditions de travail lors de la mise en place de la canalisation.

Dans une quatrième étape, le collier de serrage 7 est inséré dans l'ouverture de collier 35 et fixé pour maintenir la canalisation.
La canalisation 2 peut ensuite être insérée dans le collier de serrage 7.
L'utilisateur peut ensuite assembler le prochain ensemble de supportage de canalisation, en décalant d'un cran la tige 3.
L'homme du métier comprendra que la tige 3 peut être recoupée pour ajustement, par exemple à l'aide d'un coupe-boulon ou d'un autre outil usuel. A cet effet, des points de rupture peuvent également être prévus sur la tige pour permettre un ajustement facile de la longueur de tige.

En somme, il reste à constater que l'invention fournit un ensemble de supportage et un procédé de mise en place de l'ensemble de supportage pour élément porté. Avantageusement, le nombre de pièces est limité et permet une mise en place intuitive, avec un nombre de manoeuvre limité, facilitant ainsi le montage d'éléments portés tels que des canalisations dans des constructions type entrevous ou sous plafond.

## Revendications

1. Ensemble de supportage de canalisation, comprenant :
- une tige de supportage comprenant un corps de tige (31),
- une embase de verrouillage, comprenant un plateau (51) et une zone de maintien (54) pour le verrouillage de la tige (3) insérée dans l'embase, la tige insérée dans l'embase de verrouillage étant verrouillée par rotation relative de l'embase par rapport à la tige,
**caractérisé en ce que** la tige de supportage comprend
- une pluralité de crans latéraux (30), sensiblement perpendiculaires au corps de tige,
- un système de raccordement de collier, pour fixer un collier de serrage, prévu pour le maintien d'un élément porté.

2. Ensemble de supportage de canalisation selon la revendication 1, les crans latéraux étant régulièrement espacés afin de servir de repère.

3. Ensemble de supportage de canalisation selon l'une des revendications 1 à 2, comprenant des moyens de verrouillage de tige, adaptés pour assembler la tige avec une autre tige similaire.

4. Ensemble de supportage de canalisation selon la revendication 3, les moyens de verrouillage de tige étant adaptés pour un assemblage bout à bout de la tige de supportage avec une autre tige de supportage selon l'une des revendications précédentes.

5. Ensemble de supportage de canalisation selon l'une des revendications précédentes, la tige étant de forme sensiblement cylindrique aplatie.

6. Ensemble selon l'une des revendications précédentes, dans lequel la zone de maintien (54) est une saillie de forme cylindrique creuse sensiblement complémentaire de la tige (3), projetant sensiblement perpendiculairement au plateau (51).

7. Ensemble selon la revendication 6, la zone de maintien (54) comprenant une projection annulaire (61), la projection annulaire (61) étant sensiblement prévue pour un emboitement entre deux crans (60) successifs de la tige (3).

8. Ensemble selon la revendication 7, la zone de maintien (54) comprenant une butée (62) dans le prolongement de la projection annulaire (61), pour le verrouillage de la tige dans l'embase.

9. Ensemble selon l'une quelconque des revendications précédentes, la rotation étant une rotation d'un quart de tour.

10. Ensemble selon l'une quelconque des revendications précédentes, l'embase comprenant des moyens de marquages visuels et/ou tactiles indiquant un sens de rotation pour le verrouillage de la tige (3) dans l'embase (5).

11. Procédé de mise en place d'un ensemble de supportage d'élément porté sur un élément porteur, comprenant les étapes consistant à
- positionner une première tige de supportage d'un ensemble de verrouillage selon l'une quelconque des revendications 1 à 10, verticalement sur l'élément de construction,
- insérer la première tige de supportage dans la première embase de verrouillage,
- régler la hauteur de la première tige de supportage par rapport à l'élément de construction,
- verrouiller la première tige insérée dans l'embase par rotation relative de l'embase, par rapport à la première tige.

12. Procédé selon la revendication 11, comprenant l'étape consistant à repérer la hauteur de la première tige à l'aide de crans de la tige.

13. Procédé selon l'une des revendications 11 à 12, comprenant l'étape de positionner une autre tige de supportage bout à bout avec la première tige de supportage.

14. Procédé selon la revendication 11, dans lequel un premier et un deuxième ensembles de supportage successifs sont mis en place, le premier ensemble de supportage comprenant une première tige de supportage et une première embase, le deuxième ensemble de supportage comprenant une deuxième tige de supportage et une deuxième embase, le procédé comprenant l'étape consistant à décaler verticalement la deuxième tige sur l'élément de construction d'au moins un cran par rapport à la première tige du premier ensemble déjà monté sur l'élément de construction.

15. Procédé selon l'une des revendications 11 à 14, dans lequel l'élément porté est une canalisation.

## Patentansprüche

1. Rohrstützanordnung umfassend:
- einen Stützschaft mit einem Schaftkörper (31),
- eine Verriegelungsbasis mit einer Platte (51) und einer Haltezone (54) zum Verriegeln des in die Basis eingeführten Schaftes, wobei der in die Verriegelungsbasis eingesetzte Schaft durch Relativdrehung der Basis relativ zu dem Schaft verriegelt ist/wird,
**dadurch gekennzeichnet, daß** der Stützschaft aufweist
- eine Mehrzahl von seitlichen Rasten (30), im Wesentlichen senkrecht zum Schaftkörper,
- ein Schellenanschlusssystem zum Anschließen einer Klemmschelle, vorgesehen zum Halten eines gestützten/getragenen Elements.

2. Rohrstützanordnung nach Anspruch 1, bei welcher die seitlichen Rasten regelmäßig beabstandet sind, um als Referenz oder Bezugssystem zu dienen.

3. Rohrstützanordnung nach Anspruch 1 oder 2, umfassend Schaftverriegelungsmittel, geeignet um den Schaft mit einem anderen ähnlichen Schaft zusammenzusetzen.

4. Rohrstützanordnung nach Anspruch 3, bei welcher die Schaftverriegelungsmittel für eine Ende-zu-Ende-Montage des Stützschaftes mit einem weiteren Stützschaft nach einem der vorhergehenden Ansprüche ausgebildet ist.

5. Rohrstützanordnung nach einem der Ansprüche 1 bis 4, bei welcher der Schaft eine im Wesentlichen abgeflachte zylindrische Gestalt hat.

6. Anordnung nach einem der vorangehenden Ansprüche, bei welcher die Haltezone (54) ein hohlzylindrischer Vorsprung ist, im Wesentlichen komplementärer zum Schaft (3), im Wesentlichen senkrecht zur Platte (51) vorstehend.

7. Anordnung nach Anspruch 6, bei welcher die Haltezone (54) einen ringförmigen Vorsprung (61) aufweist, wobei der ringförmige Vorsprung (61) im Wesentlichen für einen Eingriff zwischen zwei aufeinanderfolgenden Rasten (60) des Schaftes (3) vorgesehen ist.

8. Anordnung nach Anspruch 7, bei welcher die Haltezone (54) einen Anschlag (62) in der Verlängerung des ringförmigen Vorsprungs (61) zur Verriegelung/Arretierung des Schaftes in der Basis aufweist.

9. Anordnung nach einem der vorangehenden Ansprüche, bei welcher die Drehung eine Viertelumdrehung ist.

10. Anordnung nach einem der vorangehenden Ansprüche, bei welcher die Basis visuelle und/oder haptische/taktile Markierungsmittel aufweist, die eine Drehrichtung zum Arretieren/Verriegeln des Schaft (3) in der Basis (5) angeben.

11. Verfahren zum Anordnen einer Rohrstützanordnung für ein zu tragendes oder zu stützendes Element an einem Trag- oder Trägerelement, umfassend die Schritte:
- Positionieren eines ersten Stützschaftes einer Verriegelungsanordnung nach einem der Ansprüche 1 bis 10 vertikal an/auf dem Bauelement,
- Einsetzen des ersten Stützschaftes in die erste Verriegelungsbasis,
- Einstellen der Höhe des ersten Stützschaftes relativ zu dem Bauelement,
- Verriegeln des ersten Schaftes, der in die Basis eingeführt ist, durch relative Drehung der Basis relativ zu dem ersten Schaft.

12. Verfahren nach Anspruch 11, umfassend den Schritt, der darin besteht die Höhe des ersten Schaftes mittels Rasten des Schaftes zu ermitteln.

13. Verfahren nach einem der Ansprüche 11 oder 12, umfassend den Schritt des Positionierens eines weiteren Stützschaftes auf Stoß oder Ende-zu-Ende mit dem ersten Stützschaft.

14. Verfahren nach Anspruch 11, bei welchem eine erste und eine zweite aufeinanderfolgende Stützanordnungen eingesetzt werden, wobei die erste Stützanordnung einen ersten Stützschaft und eine erste Basis umfasst, wobei die zweite Stützanordnung einen zweiten Stützschaft und eine zweite Basis umfasst, wobei das Verfahren den Schritt des vertikalen Verschiebens des zweiten Schaftes an dem Bauelement um mindestens eine Raste in Bezug auf den ersten Schaft der ersten bereits an dem Bauelement montierten Anordnung umfasst.

15. Verfahren nach einem der Ansprüche 11 bis 14, bei dem das getragene/gestützte Element ein Rohr ist.

## Claims

1. A pipe support assembly comprising:
- a support rod comprising a rod body (31),
- a locking base including a plate and a holding zone for locking the rod inserted in the base, the rod inserted in the locking base being locked by relative rotation of the base relative to the rod,
**characterized in that** the support rod comprises
- a plurality of lateral steps (30), substantially perpendicular to the rod body,
- a collar connection system, for fixing a clamping collar, provided for holding a carried element.

2. The pipe support assembly according to claim 1, the lateral steps being regularly spaced to serve as a reference.

3. The pipe support assembly according to claim 1, comprising rod locking means, adapted for assembling the rod with a further similar rod.

4. The pipe support assembly according to claim 3, wherein the rod locking means are adapted for an end-to-end assembly of the support rod with a further support rod according to one of the preceding claims.

5. The pipe support assembly according to claim 1, wherein the rod is of substantially flattened cylindrical shape.

6. The assembly according to any one of the preceding claims, wherein the holding zone (54) is a hollow cylindrical projection substantially complementary to the rod (3) and projecting substantially perpendicularly to the plate.

7. The assembly according to claim 6, wherein the holding zone (54) includes an annular projection (61), the annular projection (61) being substantially provided for an interlocking between two successive steps (60) of the rod (3).

8. The assembly according to claim 7, the holding zone (54) comprising a stop (62) in the extension of the annular projection (61), the stop being provided for locking the rod in the base.

9. The assembly according to any one of the preceding claims, wherein the rotation is a rotation of a quarter turn.

10. The assembly according to any one of the preceding claims, wherein the base comprises visual and/or tactile marking means which indicate a direction of rotation for locking the rod (3) in the base (5).

11. Method of placing a support assembly for a carried element on a support element, comprising the steps of:
- positioning a first support rod of a locking assembly according to any one of claims 1 to 10 vertically on the building element,
- inserting the first support rod into the first locking base,
- adjusting the height of the first support rod relative to the building element,
- locking the first rod inserted in the base by relative rotation of the base relative to the first rod.

12. Method according to claim 11, comprising the step of identifying the height of the first rod by means of steps of the rod.

13. The method according to claim 11 or 12, including the step of positioning a further support rod end to end with the first support rod.

14. The method according to claim 11, in which a first and a second successive support assemblies are put in place, the first support assembly comprising a first support rod and a first base, the second support assembly comprising a second support rod and a second base, the method comprising the step of vertically shifting the second rod on the building element by at least one step with respect to the first rod of the first assembly already mounted on the building element.

15. The method according to any of claim 11 to 14, in which the carried element is a pipe.
